# EUROPEAN PATENT APPLICATION

(11) **EP 1 496 496 A1**
(43) Date of publication of application: **12.01.2005**
(21) Application number: 04016105.1
(22) Date of filing: 08.07.2004
(51) Int. Cl.: G09G 3/36, G02F 1/13357, G09G 3/32

(54) **Display with a transmissive liquid crystal panel and a colour filter, said panel being arranged on an electroluminescence panel**

(30) Priority: 10.07.2003 JP 2003195035
(71) Applicant: Kabushiki Kaisha Toyota Jidoshokki, Kariya-shi, Aichi-ken (JP)
(72) Inventor: Kato, Yoshifumi, c/o K.K. Toyota Jidoshokki, Kariya-shi Aichi-ken (JP)
(74) Representative: Leson, Thomas Johannes Alois, Dipl.-Ing.

(57) **Abstract**

A display for displaying a color image in accordance with the surrounding environment. The display includes a transmissive liquid crystal panel (13) and a color filter (20) arranged on an organic EL panel (12). The organic EL panel includes EL sub-pixels, arranged on the opposite side of a display surface of the liquid crystal panel, which emit white light in accordance with each liquid crystal sub-pixel of the liquid crystal panel. The organic EL panel further includes a light reflecting portion (26; 35) for reflecting light entering from the liquid crystal panel towards the liquid crystal panel. The display includes a first driver (31, 32) for displaying an image on the liquid crystal panel, a second driver (29, 30) for displaying an image on the organic EL panel, and a controller (33) for determining whether to use the first driver and whether to use the second driver to display an image.

## Description

The present invention relates to a display with a liquid crystal panel and a color filter arranged on an electroluminescence panel.

Liquid crystal displays are widely used as a display in, for example, portable devices such as a portable computer. Further, liquid crystal displays using an organic electroluminescence element as a backlight are known in the art. A liquid crystal display that lights the backlight in dark places to function as a transmissive type display and that does not light the backlight in bright places to function as a reflective type display is proposed to satisfy the requirements of a compact and light portable device with low power-consumption. (Refer to Japanese Laid-Open Patent Publication No. 3-1896.27)

Japanese Laid-Open Patent Publication No. 7-294916 describes a color liquid crystal display for which the light source is organic electroluminescence elements that emit monochromatic light. The electroluminescence elements are arranged in alignment with the liquid crystal display pixel pattern (Refer to Japanese Laid-Open Patent Publication No. 7-294916). Color filters are not used in this display. Thus, the light exiting from the organic electroluminescence elements is not absorbed or diffused at the color filters. This allows an image of high brightness to be displayed.

However, contrast decreases in a bright environment such as when using the display outdoors during the daytime. This lowers the quality of the image. Further, since ambient light cannot be used as the light source, the amount of power consumption increases. In order to realize a full color display, an organic electroluminescence layer constituting the organic electroluminescence element needs to be formed from three layers, which are a red color luminescence layer, a green color luminescence layer, and a blue color luminescent layer. This makes the manufacturing of the display complicated.

It is an object of the present invention to provide an easily manufactured display that displays a color image suitable for the environment.

To achieve the above object, the present invention provides a display for displaying an image. The display is provided with a color filter and a transmissive or semi-transmissive liquid crystal panel, which includes a display surface, a rear surface located on the opposite side of the display surface, and a plurality of liquid crystal sub-pixels. An electroluminescence panel is arranged on the rear surface side of the liquid crystal panel. The electroluminescence panel includes a plurality of EL sub-pixels, each corresponding to one of the liquid crystal sub-pixels, and a light reflecting portion for reflecting light entering from the liquid crystal panel back towards the liquid crystal panel. Each EL sub-pixel emits white light and has light transmissivity relative to at least light having a wavelength that enables transmission through the corresponding color filter. A first driving means drives the liquid crystal panel. A second driving means drives the electroluminescence panel. A selecting means determines whether to use the first driving means and whether to use the second driving means to display an image.

A further aspect of the present invention provides a display for displaying an image. The display is provided with a color filter and a transmissive or semi-transmissive liquid crystal panel, which includes a display surface, a rear surface located on the opposite side of the display surface, and a plurality of liquid crystal sub-pixels. An electroluminescence panel is arranged on the rear surface side of the liquid crystal panel. The electroluminescence panel includes a plurality of EL sub-pixels, each corresponding to one of the liquid crystal sub-pixels, and a light reflecting portion for reflecting light entering from the liquid crystal panel back towards the liquid crystal panel. Each EL sub-pixel emits white light and has light transmissivity relative to at least light having a wavelength that enables transmission through the corresponding color filter. A first driving means drives the liquid crystal panel. A second driving means drives the electroluminescence panel. A third driving means simultaneously drives the liquid crystal panel and the electroluminescence panel. A selecting means determines which one of the first driving means, the second driving means, and the third driving means to use to display the image. When the image is displayed using the third driving means, the third driving means controls the first and the second driving means to display an image on the liquid crystal panel while causing EL sub-pixels corresponding to liquid crystal sub-pixels that are in a black display state to be in a non-light emitting state and the other EL sub-pixels to be in a light emitting state.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiment together with the accompanying drawings in which:
Fig. 1 is a cross sectional view of a display according to a preferred embodiment of the present invention;
Fig. 2 is a schematic view showing a drive circuit of a display section of the display of Fig. 1;
Figs. 3 to 5 are cross sectional views illustrating the operation of the display of Fig. 1; and
Fig: 6 is a cross sectional view showing a modification of the display.

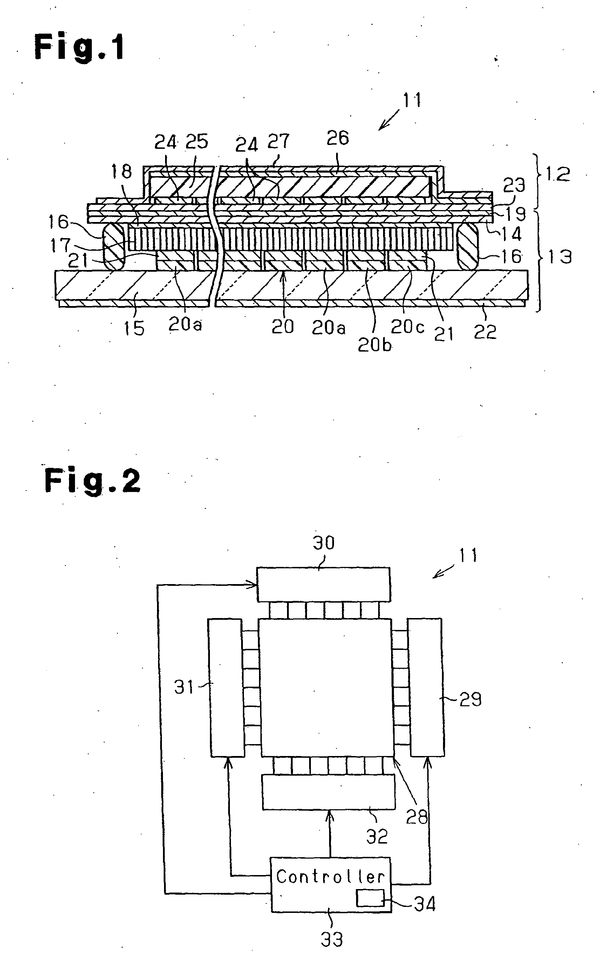

A display according to a preferred embodiment of the present invention.will now be described. The bottom side as viewed in Fig. 1 corresponds to the display side (direction of light exit) of the display. In the drawings, the size of each member differs from the actual size.

As shown in Fig. 1, the display 11 includes a liquid crystal panel 13 and a color filter 20 arranged on an organic electroluminescence panel (organic EL panel) 12. The organic EL panel 12 and the liquid crystal panel 13 are both formed in units. The display 11 is formed by bonding the two panels. The organic EL panel 12 employs, for example, a white light emitting passive matrix drive system, and the liquid crystal panel 13 employs, for example, a transmissive type passive matrix drive system.

The liquid crystal panel 13 includes two transparent substrates 14 and 15. The two substrates 14 and 15 are adhered together with a predetermined space in between. Liquid crystal 17 is filled in the space between the substrates 14 and 15 and sealed with a sealing member 16. The substrates 14 and 15 are made of, for example, glass. A plurality of parallel strips of transparent electrodes 18 are formed on the upper substrate 14 at the surface (lower surface) closer to the organic EL panel 12 so as to face the liquid crystal 17. A polarizing plate 19 is arranged on the surface (upper surface) of the substrate 14 facing away from the liquid crystal 17. The term "transparent" means having transmissivity relative to light having a wavelength that enables the light to exit outward from the display 11, and in general, refers to having transmissivity relative to visible light.

The color filter 20 is formed on the surface (upper surface) facing towards the liquid crystal 17 of the lower substrate 15. A plurality of scanning electrodes 21 is formed on the color filter 20 so as to be orthogonal to the transparent electrode 18. Therefore, the color filter 20 is incorporated in the liquid crystal panel 13. A polarizing plate 22 is formed on the surface (lower surface) of the substrate 15 facing away from the scanning electrode 21.

The transparent electrode 18 and the scanning electrode 21 are made of a known transparent electrode material such as ITO (indium tin oxide) and IZO (indium zinc oxide). Each intersection of the transparent electrode 18 and the scanning electrode 21 function as sub-pixels (liquid crystal sub-pixels) of the liquid crystal panel 13. When the display 11 is viewed from the substrate 15, the liquid crystal sub-pixels are arranged in a matrix form. The color filter 20 includes a plurality of red regions 20a, a plurality of green regions 20b, and a plurality of blue regions 20c each corresponding to the three colors of R (red) G (green) and B (blue). The regions 20a to 20c are arranged in parallel strips.

The liquid crystal panel 13 is normally in a white mode. That is, when voltage is not applied between the transparent electrode 18 and the scanning electrode 21, the light passing through the polarizing plate 19 and the liquid crystal 17 passes through the polarizing plate 22, and the light passing through the polarizing plate 22 and the liquid crystal 17 passes through the polarizing plate 19. Further, as the voltage applied.between the transparent electrode 18 and the scanning electrode 21 increases, the fraction of the light passing through the polarizing plate 19 and the liquid crystal 17 passing through the polarizing plate 22 decreases and the fraction of the light passing through the polarizing plate 22 and the liquid crystal 17 passing through the polarizing plate 19 decreases. When a predetermined value of voltage is applied, the light is blocked by the polarizing plate 19 or the polarizing plate 22. Therefore, on the liquid crystal panel 13, when voltage is not applied between the transparent electrode 18 and the scanning electrode 21, a white color is displayed. When the applied voltage increases causing light transmissivity to decrease, a gray color is displayed. When a predetermined value of voltage is applied, a black color is displayed.

The organic EL panel 12 includes sequentially superimposed layers of a plurality of first electrodes 24, an organic electroluminescence layer 25 including a luminescent layer emitting white light, a second electrode 26, and a passivation film 27. The first electrodes 24 are arranged in strips each facing one of the regions 20a to 20c. The organic electroluminescence layer 25 is separated by an insulating barrier (not shown) and includes a plurality of strips of regions extending in a direction orthogonal to the first electrode 24. The second electrode 26 is superimposed on the organic electroluminescence layer 25. The intersections of the plurality of first electrodes 24 and the plurality of second electrodes 26 function as sub-pixels (EL sub-pixels) of the organic EL panel 12. When the display 11 is viewed from the substrate 15, the EL sub-pixels are in a matrix form overlapping the liquid . crystal sub-pixels. That is, a plurality of EL sub-pixels emitting white light is arranged so as to correspond to the liquid crystal sub-pixels. Thus, the light passing through the liquid crystal sub-pixel from the organic EL panel 12 towards the color filter 20 passes through the regions 20a to 20c facing towards the relevant liquid crystal sub-pixel and exits from the substrate 15. The white light from the organic electroluminescence layer 25 passes through each region 20a to 20c and becomes the light of the corresponding color. A desired color can be produced by combining the light of the red (R), green (G), and blue (B) sub-pixels.

The organic electroluminescence layer 25 emits light having a wavelength in the transmission range of the color filter 20 (regions 20a, 20b, 20c), that is, light having a wavelength in the transmission range of the red region 20a, light having a wavelength in the transmission range of the green region 20b, and light having a wavelength in the transmission range of the blue region 20c, and presents a white color.

The passivation film 27 covers exposed parts of the first electrode 24, the organic electroluminescence layer 25 and the second electrode 26, as well as the exposed surface of a substrate 23 on the side facing towards the first electrode 24. The passivation film 27 functions to suppress the permeating of at least moisture (vapor) and oxygen, and is made of a transparent material. In this embodiment, the passivation film 27 is made of silicon nitride.

In this embodiment, the first electrode 24 acts as an anode and the second electrode 26 acts as a cathode. The first electrode 24 is made of a transparent electrically conductive material such as ITO. The second electrode 26 is made of a light reflective metal, for example, chromium, aluminum and the like. The second electrode 26 also functions as a light reflecting portion for reflecting the light emitted from the white light luminescent layer, which constitutes EL sub-pixels, in a direction opposite to the liquid crystal panel 13. That is, the organic EL panel 12 includes a light reflecting portion that reflects the light entering from the liquid crystal panel 13 back towards the liquid crystal panel 13.

A known configuration is used for the organic electroluminescence layer 25. The organic electroluminescence layer 25 includes, from the side closest to the first electrode 24, three layers including a hole injection layer, a luminescent layer, and an electron injection layer, or four layers including a hole injection layer, a hole transport layer, a luminescent layer, and an electron transport layer. The luminescent layer emits a white light. The organic electroluminescence layer 25 is transparent. That is, each sub-pixel of the organic EL panel 12 has light transmissivity that at least transmits light having a wavelength transmitted by the corresponding regions 20a to 20c.

As shown in Fig. 2, a first electrode driver 29 for supplying driving voltage to the first electrode 24 and a second electrode driver 30 for supplying driving voltage to the second electrode 26 are arranged outside a display section 28 formed by the organic EL panel 12 and the liquid crystal panel 13. The first electrode driver 29 and the second electrode driver 30 function as a second driving means for displaying an image on the organic EL panel 12. A scanning electrode driver 31 for supplying driving voltage to the scanning electrode 21 and a transparent electrode driver 32 for supplying driving voltage to the transparent electrode 18 are arranged outside the display section 28. The scanning electrode driver 31 and the transparent electrode driver 32 function as a first driving means for displaying an image on the liquid crystal panel 13. Each driver 29 to 32 is controlled by a control signal from a controller 33.

The controller 33 drives the organic EL panel 12 and the liquid crystal panel 13 in a plurality of display modes. The controller 33 includes an input device 34. The controller 33 determines the display mode.in response to a command signal input through the input device 34 and provides the control signal to each of the drivers 29 to 32 to drive the organic EL panel 12 and the liquid crystal panel 13 in the relevant display mode. The controller 33 functions as a third driving means for simultaneously driving the liquid crystal panel 13 and the organic EL panel 12. The controller 33 and the input device 34 function as a selecting means for determining whether to use the first driving means or the second driving means to display the image.

When simultaneously driving the liquid crystal panel 13 and the organic EL panel 12, the controller 33 controls the first driving means and the second driving means to display an image on the liquid crystal panel 13. At the same time, the controller 33 causes the EL sub-pixels corresponding to the liquid crystal sub-pixels that are in a black display state to enter a non-light emitting state and the other EL sub-pixels to enter a light emitting state.

The plurality of display modes includes a liquid crystal display mode in which only the liquid crystal panel 13 is driven, and a simultaneous driving mode in which the liquid crystal panel 13 and the organic EL panel 12 are simultaneously driven. In the liquid crystal display mode, the controller 33 drives only the first driving means (scanning electrode driver 31 and the transparent electrode driver 32) in the passive matrix drive system.

The simultaneous driving mode includes a backlight mode, in which the organic EL panel 12 is used as a simple backlight, and a synchronizing mode, in which the organic EL panel 12 is synchronized with and driven with the liquid crystal panel 13. Here, the phrase "the organic EL panel 12 is synchronized with and driven with the liquid crystal panel 13" refers to a state in which the EL sub-pixels corresponding to the liquid crystal sub-pixels in the black display state are in the non-light emitting state and the EL sub-pixels corresponding to the liquid crystal sub-pixels through which light is transmitted are in a light-emitting state. The synchronizing mode includes a first synchronizing mode and a second synchronizing mode. In each synchronizing mode, the controller 33 controls each of the drivers 29 to 32 to drive the liquid crystal panel 13 and the organic EL panel 12 in the passive matrix drive system.

In the first synchronizing mode, the controller 33 causes the EL sub-pixels corresponding to the liquid crystal sub-pixels in the black display state to be in a non-light emitting state and causes the other EL sub-pixels to be in a light emitting state. That is, the controller 33 controls the drivers 29 to 32 so that the first driving means displays an image on the liquid crystal panel 13 and the second driving means causes the EL sub-pixels other than those corresponding to the liquid crystal sub-pixel in the black display state to emit light at the same brightness.

When driving the organic EL panel 12 and the liquid crystal panel 13 in the first synchronizing mode, the controller 33 and the input device 34 function as a second selecting means to determine whether to emit the entire surface of the organic EL panel 12 or to non-emit the organic EL panel 12 if the image is to be displayed using the first driving means.

In the second synchronizing mode, the controller 33 causes the EL sub-pixels corresponding to the liquid crystal sub-pixels in the black display state to be in a non-light emitting state and the other EL sub-pixels to be in a light emitting state when the brightness is in accordance with the amount of light transmission of the corresponding liquid crystal sub-pixel. That is, the controller 33 controls the first driving means in the same manner as described above and controls each of the drivers 29 to 32 so that the EL sub-pixels other than the EL sub-pixels corresponding to the liquid crystal sub-pixel in the black display state emit light in a state in which the brightness is in accordance with the amount of light transmission of the corresponding liquid crystal sub-pixel.

In the present embodiment, the organic EL panel 12 and the liquid crystal panel 13 are driven in the passive matrix drive system, and scanning of the liquid crystal panel and scanning of the electroluminescence panel are synchronized.

The operation of the display 11 will now be described.
When the display 11 is turned ON and an image is displayed on the display screen of the display section 28, the controller 33 provides the command signal to each of the drivers 29 to 32 to drive the organic EL panel 12 and the liquid crystal panel 13 in accordance with the display mode input from the input device 34.

In the liquid crystal display mode, the organic EL panel 12 is maintained in the non-light emitting state, and the liquid crystal panel 13 is driven in the passive matrix drive system. That is, the controller 33 provides the command signal to the first electrode driver 29 and the second electrode driver 30 to maintain the state in which voltage is not applied between the first electrode 24 and the second electrode 26. Further, the controller 33 provides the command signal to the scanning electrode driver 31 and the transparent electrode driver 32 of the liquid crystal panel 13 to drive each scanning electrode 21 and the transparent electrode 18 in the passive matrix drive system.

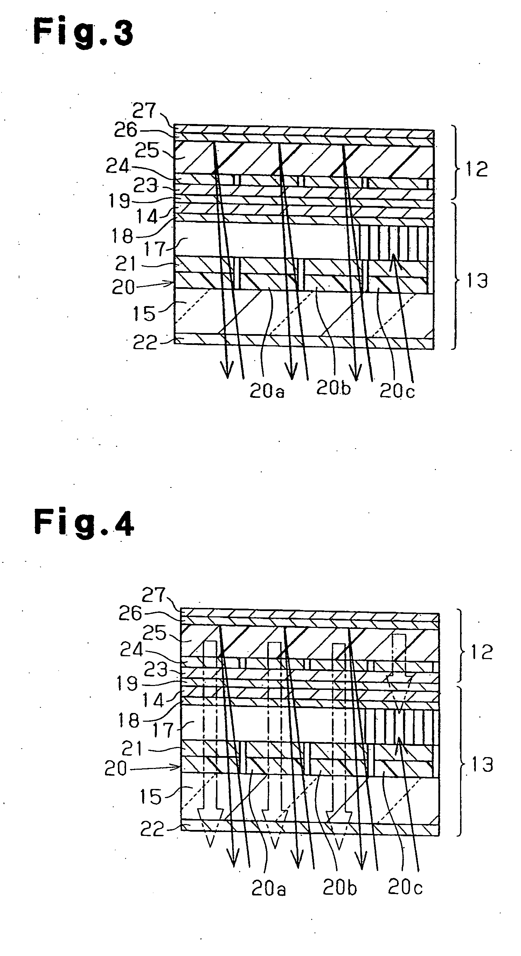

In Fig. 3, the area of the liquid crystal 17 in the black display state is shown by vertical stripes. As shown by arrows in Fig. 3, the ambient light entering the liquid crystal panel 13 is reflected by the second electrode 26 of the organic EL panel 12 at the area corresponding to the liquid crystal sub-pixels other than those in the black display state. The reflected light enters the liquid crystal panel 13 from the organic EL panel 12, passes through the regions 20a to 20c, and exits from the substrate 15. An image is displayed on the liquid crystal panel 13 with high quality using the bright ambient light as the light source.

In the backlight mode of the simultaneous driving mode for simultaneously driving the liquid crystal panel 13 and the organic EL panel 12, all EL sub-pixels are maintained in a light emitting state at the same brightness, and the liquid crystal panel 13 is driven in the passive matrix drive system. That is, the controller 33 provides a command signal to the first electrode driver 29 and the second electrode driver 30 to maintain the state in which the same voltage is applied between all of the first electrodes 24 and the second electrodes 26. Further, the controller 33 provides a command signal to the scanning electrode driver 31 and the transparent electrode driver 32 of the liquid crystal panel 13 to drive each scanning electrode 21 and the transparent electrode 18 in the passive matrix drive system.

As shown in Fig. 4, the ambient light entering the liquid crystal panel 13 is reflected by the second electrode 26 of_the organic EL panel 12 at the area corresponding to the liquid crystal sub-pixels other than those in the black display state. The reflected light passes through the color filter 20 (regions 20a to 20c) and exits from the substrate 15. Further, the organic electroluminescence layer 25 of the organic EL panel 12 emits light (wide arrow). In the liquid crystal panel 13, the light emitted from the organic electroluminescence layer 25 is blocked at the area corresponding to the liquid crystal sub-pixel in the black display state. At the area corresponding to the liquid crystal sub-pixels other than those in the black display state, the light emitted from the organic electroluminescence layer 25 passes through the regions 20a to 20c and exits from the substrate 15. Thus, in a relatively dark environment such as during the night or in a room with low illuminance, a color image is displayed using the organic electroluminescence layer 25 of the organic EL panel 12 as the main light source.

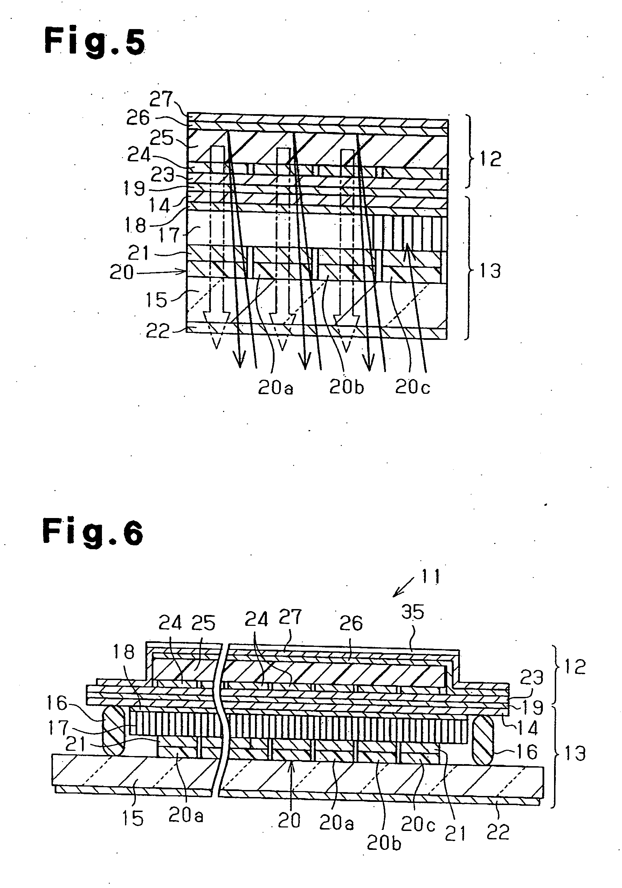

In the first synchronizing mode of the simultaneous driving mode, the EL sub-pixels corresponding to the liquid crystal sub-pixels in the black display state are in a non-light emitting state and the other EL sub-pixels emit light at the same brightness. Further, the controller 33 provides the command signal to the scanning electrode driver 31 and the transparent electrode driver 32 of the liquid crystal panel 13 to drive each scanning electrode 21 and the transparent electrode 18 in the passive matrix drive system. The example shown in Fig. 5 differs from the backlight mode in that the organic electroluminescence layer 25 of the organic EL panel 12 does not emit light at the area corresponding to the liquid crystal sub-pixel in the black display state. The first synchronizing mode consumes less power than the backlight mode. In Fig. 5, the narrow arrows indicate ambient light, and the wide arrows indicate the light emitted from the organic electroluminescence layer 25. The wide arrows also indicate the reflection of the light emitted from the organic electroluminescence layer 25 and reflected by the second electrode 26.

The second synchronizing mode of the simultaneous driving mode is similar to the first synchronizing mode in that the EL sub-pixel corresponding to the liquid crystal sub-pixel in the black display state is in a non-luminescent state. However, the emitting state (brightness of the organic electroluminescence layer 25) of the EL sub-pixel is adjusted in accordance with the amount of light transmission (gradation display of the liquid crystal panel 13) of the liquid crystal sub-pixels. That is, the EL sub-pixels corresponding to the liquid crystal sub-pixels having a large amount of light transmission have high brightness, and the EL sub-pixels corresponding to the liquid crystal sub-pixels having a small amount of light transmission has low brightness. Therefore, in the second synchronizing mode, the image is displayed with higher contrast, and the power consumption is reduced compared to the first synchronizing mode.

The first preferred embodiment of the present invention has the following advantages.
(1) In a bright environment, such as outdoors during the day, the ambient light is used as the light source, and the liquid crystal panel 13 is driven without emitting light from the organic EL panel 12 to display a sharp image. Further, the power consumption is reduced compared to a display in which the backlight is constantly lit. In places where ambient light is insufficient (relatively dark environment), such as during the night or in a dark room, the organic EL panel 12 and the liquid crystal panel 13 are both driven to display 6 sharp image. Thus, the driving state of the organic EL panel 12 is selectively determined in accordance with the brightness outside the display 1.1 (preferably, outside the liquid crystal panel). This enables the display of an appropriate color image without wasting power. A sharp image is thus presented to the user under any condition.
   The display 11 includes a transmissive liquid crystal panel 13 and a color filter 20 arranged on the organic EL panel 12. The organic EL panel 12 is arranged on the other side of the display 11 that faces away from the liquid crystal panel 13. The organic EL panel 12 includes EL sub-pixels for emitting white light in correspondence to each of the liquid crystal sub-pixels. Each EL sub-pixel has transmissivity relative to at least light having a wavelength that is transmittable by the corresponding regions 20a to 20c. The organic EL panel 12 includes a light reflecting portion for reflecting the light entering from the liquid crystal panel 13 back towards the liquid crystal panel 13. The display 11 includes a first driving means for displaying the image on the liquid crystal panel 13, a second driving means for displaying the image on the organic EL panel 12, and a selecting means for determining the driving means that is to be used to display the image.
(2) All of the EL sub-pixels emit white light. Thus, there is no need to form the organic electroluminescence layer 25 in three layers, one to emit red light, another to emit green light, and a further layer to emit blue light. Thus, the display 11 (organic EL panel 12) is easily manufactured compared to when exclusive organic electroluminescence layers are used to emit red light, green light, and blue light in the organic electroluminescence layer 25 constituting the EL sub-pixels.
   When changing the color of the light emitted from each sub-pixel of the electroluminescence panel, the life span of each sub-pixel must be substantially the same, and specific sub-pixels should not be too bright. Thus, the materials that may be used for the electroluminescence panel are extremely limited. In the display 11 of the present invention, however, the sub-pixels of the organic EL panel 12 are configured by the same organic electroluminescence element (white light emission). Thus, the above mentioned problem does not occur.
(3) The controller 33 is configured so as to select whether to cause all EL sub-pixels to emit light at the same brightness or to cause the EL sub-pixels corresponding to the liquid crystal sub-pixel in the black display state to be in a non-light emitting state and the other sub-pixels to be in a light emitting state. Thus, the controller 33 selects whether to hold all EL sub-pixels in the same light emitting state (same brightness) and use the EL sub-pixels as a backlight or drive the organic EL panel 12 synchronized with the liquid crystal panel 13.
(4) When simultaneously driving the liquid crystal panel 13 and the organic EL panel 12, if the first synchronizing mode is selected, an image with higher contrast is displayed with less power consumption compared to when all of the EL sub-pixels emit light at the same brightness. Further, the control of the first electrode driver 29 and the second electrode driver 30 is simplified. This is because when the first synchronizing mode is selected, only the liquid crystal sub-pixels corresponding to the liquid crystal sub-pixels that must emit light towards the display surface side emit light at the same brightness.
(5) When simultaneously driving the liquid crystal panel 13 and the organic EL panel 12, if the second synchronizing mode is selected, an image with higher contrast is displayed with less power consumption compared to when all EL sub-pixels emit light at the same brightness. Further, compared to when the first synchronizing mode is selected, the image is displayed with higher contrast. This is based on the fact that when the second synchronizing mode is selected, the EL sub-pixels corresponding to the liquid crystal sub-pixels, which must emit light towards the display surface, emit light at a brightness that is in accordance with the transmission state of those liquid crystal sub-pixels. That is, the EL sub-pixels corresponding to the liquid crystal sub-pixels, which transmit a large amount of light, emit light at a high brightness, and the EL sub-pixels corresponding to the liquid crystal sub-pixels, which transmit a small amount of light, emit light at a low brightness.
(6) An image is displayed with higher contrast than when the liquid crystal panel 13 is in a normally black mode. This is because the liquid crystal panel 13 is normally in the white mode, and the liquid crystal panel 13 is maintained in the black display state when voltage is applied thereto. Thus, the black display is shown with a sharper contrast than in the normally black mode.
(7) The light emitted from the organic EL panel 12 in a direction opposite to the liquid crystal panel 13 is used as the light source for the liquid crystal panel 13. This is because the light reflecting portion and the liquid crystal panel 13 are located on opposite sides of the organic EL panel 12.
(8) The configuration is simplified using ambient light and light emitted from the organic EL panel 12 away from the liquid crystal panel 13 as the light source of the liquid crystal panel 13. This is based on the fact that among the two electrodes sandwiching the organic electroluminescence layer 25, the second electrode 26, which is located on the side of the organic electroluminescence layer 25 opposite to the liquid crystal panel 13, also functions as the light reflecting portion.
(9) Compared to a configuration in which one panel uses the passive matrix drive system and the other panel uses the active matrix drive system, the control in the second synchronizing mode is facilitated. This is based on the fact that both the organic EL panel 12 and the liquid crystal panel 13 are configured as the passive matrix drive system and thus a common control signal may be used when driving both the organic EL panel 12 and the liquid crystal panel 13 in the second synchronizing mode.
(10) A switch for controlling the application of voltage does not have to be provided near each EL sub-pixel. This is because the organic EL panel 12 is a passive matrix drive system.
(11) The liquid crystal panel 13 is a unit including the color filter 20. Further, the organic EL panel 12 is a unit. Thus, the display 11 may be manufactured by combining the organic EL panel 12 and the liquid crystal panel 13, which are separately manufactured. This facilitates the manufacturing of the display 11. Further, the display is readily manufactured in many variations in accordance with the combination of the organic EL panel 12 and the liquid crystal panel 13.
(12) The organic EL panel 12 is driven with a relatively low power supply voltage. Thus, the power supply voltage is reduced compared to when an inorganic electroluminescence panel is used.

It should be understood that the present invention may be embodied in the following forms.

The second electrode 26 does not have to function as the light reflecting portion. In this case, for example, referring to Fig. 6, the second electrode 26 is made of a transparent electrically conductive material (e.g., ITO), and a reflecting member 35 functioning as the light reflecting portion is arranged on the second electrode 26 facing away from the liquid crystal panel 13. In the example shown in Fig. 6, the passivation film 27 is transparent, and the reflecting member 35 is located on the outer side of the passivation film 27. The reflecting member 35 is a film made of metal, such as chromium. Even in such a case, after the organic EL panel 12 and the liquid crystal panel 13 are separately manufactured, the two panels are combined to form the display 11. Further, compared to a configuration in which one of the electrodes (second electrode 26) arranged to sandwich the organic electroluminescence layer 25 also functions as the light reflecting portion, the degree of freedom in selecting the material forming the light reflecting portion of high reflectivity is high.

The light reflecting portion needs only to be arranged on the side of the liquid crystal panel 13 that is opposite to the organic EL panel 12. Thus, the light reflecting portion may be arranged on the same side as the liquid crystal panel 13 with respect to the luminescent layer of the organic EL panel 12. For example, a light reflecting portion (e.g., half mirror) that reflects light directed from the liquid crystal panel 13 towards the organic EL panel 12 but transmits the light directed from the organic EL panel 12 side towards the liquid crystal panel 13 may be arranged between the organic EL panel 12 and the liquid crystal panel. In such a case as well, the ambient light reflected at the light reflecting portion is used as the light source for the liquid crystal panel 13, and the light emitted from the organic EL panel 12 passes through the light reflecting portion and is used as the light source for the liquid crystal panel 13.

The selection of the display mode of the display 11 does not have to be based on the command signal input to the controller 33 through the operation of the input device 34 by the user of the display 11. For example, a sensor for measuring the luminosity outside the display 11 (more preferably, the display surface) may be employed. If the luminosity is greater than or equal to a threshold value, an image is displayed in the liquid crystal display mode. If the luminosity is less than the threshold value, an image is displayed in one of the simultaneous driving modes. Further, a plurality of thresholds may be used so that the brightness of the organic EL panel 12 when used as the backlight mode is set in a plurality of stages depending on the amount of the luminosity detected by the sensor. In this case, an image is displayed using power efficiently even if the user does not determine the display mode.

In the configuration described above in which the display mode is automatically set before the display mode is input from the input device 34, the display mode may be input from the input device 34 to display an image in accordance with the display mode input to the input device 34. Further, a configuration for determining whether to give priority to the display mode input through the input device 34 or to the display mode automatically set by the controller 33 may be provided. For example, a selector may be provided. In this case, the degree of freedom in selecting the display mode is higher.

The first electrode 24 arranged on the substrate 23 may be the cathode, and the second electrode 26 may be the anode. In this case, the configuration of the organic electroluminescence layer 25 is also changed. In this case, the organic electroluminescence layer 25 may include from the side closer to the first electrode 24 three layers, including an electron injection layer, a luminescent layer, and a hole injection layer. Alternatively, the organic electroluminescence layer 25 may include, five layers, an electron injection layer, an electron transport layer, a luminescent layer, a hole transport layer and a hole injection layer.

The first electrode 24, the second electrode 26, and each layer of the organic electroluminescence layer 25 may be formed through a known thin-film manufacturing method using a known material. The material of the anode may be, in addition to ITO, IZO, zinc aluminum oxide and the like. The material of the cathode may be, in addition to chromium and aluminum, an alloy containing more than one or more metals selected from Li, Mg, Ca, Sr, La, Ce, Er, Eu, Sc, Y, Yb, etc., which have a low work function, and a stable metal element of Ag, Al, Cu, etc. More specifically, the alloys of MgAg, AlLi, CuLi, etc. may be used.

The hole transport layer may be formed from low molecular weight materials including metal phthalocyanines, such as copper phthalocyanine and tetra (t-butyl) copper phthalocyanine, metal-free phthalocyanines, quinacridones, and aromatic tertiary amines, such as 1,1-bis(4-di-p-tolylaminophenyl)cyclohexane, and N,N'-diphenyl-N,N'-bis-(3-methylphenyl)-1,1'-biphenyl-4,4'-diamine, N,N'-di(1-naphtyl)-N,N'-diphenyl-1,1'-biphenyl-4,4'--diamine; polymer materials, such as polythiophene and polyaniline; polythiophene oligomer materials; and other materials that are known to be used to form the hole transport layer.

The luminescent layer may be formed from low molecular weight materials such as 9-10-diaryl anthracene derivatives, pyrene, coronene, perylene, rubrene, 1,1,4,4-tetraphenylbutadiene, tris(8-quinolinolate) aluminum, tris(4-methyl-8-quinoliate) aluminum, bis(8-quinolinolate) zinc, tris(4-methyl-5-trifluoromethyl-8-quinolinolate) aluminum, bis(2-methyl-5-trifluorormethyly-8-quinolinolate) [4-(4-cyanophenyl)phenolate] aluminum, bis(2-methyl-5-cyano-8-quinolinolate)[4-(4-cyanophenyl)phenolate] aluminum, tris(8-quinolinolate) scandium, bis[8-(p-tosyl)aminoquinoline] zinc or cadmium, 1,2,3,4-tetraphenylcyclopentadiene, pentaphenylcyclopentadiene, poly-2,5-diheptyloxy-p-phenylene vinylene, fluorescent coumarins, fluorescent perylenes, fluorescent pyrans, fluorescent anthrons, fluorescent porphyrins, fluorescent quinacridones, N,N'-dialkyl-replaced fluorescent quinacridones, fluorescent naphthalimides, N,N'-diaryl-replaced fluorescent pyrroropyrroles; polymer materials, such as polyfluorene, poly p-phenylene vinylene, and polythiophene; and other materials that are known to be used to form the luminescent layer.

The electron transport layer may be formed from 2-(4-biphenylyl)-5-(4-t-butylphenyl)-1,3,4-oxadiazole; 2,5-bis(1-naphthyl)-1,3,4-oxadiazole and oxadiazole derivatives; bis(10-hydroxybenzo[h]quinolinolato).beryllium; and triazoles.

Instead of using a transparent material that is electrically conductive, the first electrode 24 and the second electrode 26 may be formed from a transparent and extremely thin metal layer. The phrase "extremely thin" refers to the thickness being less than 50nm, and preferably, within the range of 0.5 to 20nm. Further, the first electrode 24 and the second electrode 26 may have a configuration in which such metal layer and the known transparent electrode, made of, for example, ITO, are superimposed.

The white luminescent layer constituting the organic electroluminescence layer 25 may be a luminescent layer having a configuration in which a plurality of luminescent layers including different light-emitting colors are superimposed or a configuration in which light-emitting material containing a plurality of light-emitting centers in a single luminescent layer may be used. The employment of the configuration in which the light-emitting material containing a plurality of light-emitting centers in a single luminescent layer reduces the number of applications required to form the luminescent layer.

The organic EL panel 12 is not limited to the bottom emission type in which light from the organic electroluminescence layer 25 exits from the substrate 23. The organic EL panel 12 may, for example, be a top emission type in which light exits from the side facing away from the substrate 23, and the organic EL panel 12 and the liquid crystal panel 13 may be joined with each other so that the substrate 23 is positioned on the opposite side of the liquid crystal panel 13.

The liquid crystal panel 13 does not have to be normally white and may be normally black. In this case, when displaying an image on the organic EL panel 12 using the EL panel driving means, the amount of power consumption for maintaining the liquid crystal panel 13 in the black display state is lower than in the normally white mode.

The organic EL panel 12 and the liquid crystal panel 13 are not limited to the passive matrix drive system. For example, the liquid crystal panel 13 may employ the passive matrix drive system, and the organic EL panel 12 may employ the active matrix drive system. Alternatively, both the organic EL panel 12 and the liquid crystal panel 13 may employ the active matrix drive system. In the active matrix drive. system, an active element is arranged for each sub-pixel, and voltage is either applied or not applied to an electrode for each sub-pixel. On the other hand, in the passive matrix drive system, the adjustment of the transmissivity of the liquid crystal 17 and the brightness of the organic electroluminescence layer 25 are carried out for each scanning electrode 21 or for each first electrode 24. Therefore, when adjusting the transmissivity of the liquid crystal 17 for each sub-pixel or adjusting the brightness of the organic electroluminescence layer 25, the active matrix drive system must be used.

When simultaneously driving the liquid crystal.panel 13 and the organic EL panel 12, the brightness of the EL sub-pixels corresponding to the liquid crystal sub-pixels is continuously changed in accordance with the transmittance state of the liquid crystal sub-pixels. However, the brightness may be changed in a stepped manner. For example, the transmission state of the liquid crystal sub-pixels may be divided into a plurality of stages, and the brightness of each EL sub-pixel may be set in advance in accordance with each stage. Thus, the EL sub-pixel emits light at the brightness set in accordance with the transmission state of the liquid crystal sub-pixel. In this case, the contrast is higher than in the first synchronizing mode, and the control is easier than in the second synchronizing mode.

The gradation display method of the display 11 is not limited to the method of adjusting the brightness and the transmissivity with respect to both the EL sub-pixel and the liquid sub-pixel. Other methods include, (1) a method of maximizing the transmissivity of the liquid crystal sub-pixel and adjusting the brightness of the EL sub-pixel, (2) a method of emitting the EL sub-pixel at the maximum brightness and adjusting the transmissivity of the liquid crystal sub-pixel, and (3) a method of emitting light from all of the EL sub-pixels at the maximum brightness to use the light as a backlight, and adjusting the transmissivity of the liquid crystal sub-pixel.

More generally, the gradation process is performed according to one of the following methods.
- A method for performing the gradation process by controlling the amount of light transmission of each liquid crystal sub-pixel. In this case, each EL sub-pixel may emit light at the same brightness.
- A method for performing the gradation process by controlling the brightness of the light emitted from each EL sub-pixel.

Further, an image may be displayed on the liquid crystal panel, and the entire surface of the electroluminescence panel may emit light.

The passivation film 27 constituting the organic EL panel 12 does not necessarily have to be made of silicon nitride and may be made of other materials that is transparent and that does not permeate moisture and gas such as oxygen. For example, silicon oxide and diamond-like carbon may be used. Further, the passivation film 27 is not limited to a film formed by the deposition of silicon nitride, silicon oxide, diamond-like carbon and the like, and may also be formed by applying, for example, polysilazane so as to form a coating.

A sealing can (sealing cover) may be used instead of the passivation film 27 to protect the organic electroluminescence layer 25 from external moisture and oxygen. For example, a cover made of light transmissive glass may be bonded to the substrate 23 with a sealing agent so as to cover the color filter 20, the first electrode 24, the organic electroluminescence layer 25, and the second electrode 26.

The liquid crystal sub-pixels and the EL sub-pixels do not necessarily have to be arranged in parallel strips, and may be arranged in a honeycomb manner. In this case, the regions 20a and 20c are also arranged in the same manner.

The color filter 20 does not necessarily have to include the regions 20a, 20b, and 20c for the three colors of red (R), green (G), and blue (B) that are arranged in parallel strips. For example, among the regions 20a, 20b, and 20c of the three colors of R, G, and B, a filter of the same color may be arranged diagonally or in a mosaic arrangement, or the regions 20a, 20b, and 20c of the three colors of R, G, B may be arranged in a triangular shape or in a delta arrangement. The shape of each filter is not limited to a square and may be a hexagon.

Only the first synchronizing mode or only the second synchronizing mode may be used as the synchronizing mode for driving the organic EL panel 12 and the liquid crystal panel 13 in the synchronizing state. In this case, control is easier if only the first synchronizing mode is used.

Only the backlight mode may be used as the simultaneous driving mode and the synchronizing modes may be eliminated. In the backlight mode, the brightness of the EL sub-pixels may be selected from a plurality of stages. For example, the brightness of the EL sub-pixels may be selected from the three steps of high brightness, medium brightness, and low brightness. In this case, the user may select the brightness in accordance with the surrounding illuminance.

The liquid crystal panel 13 may be semi-transmissive.

The inorganic electroluminescence panel (inorganic EL panel) may be used as the electroluminescence panel in place of the organic EL panel 12. In this case, the voltage applied to emit light from the EL element is higher than the organic EL panel 12. However, the merits of a display using the EL element and the merits of the liquid crystal display enable the display of a color image in accordance with the environment and the purpose of use.

It should be apparent to those skilled in the art that the present invention may be embodied in many other specific forms without departing from the spirit or scope of the invention. Therefore, the present invention is not to be limited to the details given herein, but may be modified within the scope and equivalence of the appended claims.
A display for displaying a color image in accordance. with the surrounding environment. The display includes a transmissive liquid crystal panel (13) and a color filter (20) arranged on an organic EL panel (12). The organic EL panel includes EL sub-pixels, arranged on the opposite side of a display surface of the liquid crystal panel, which emit white light in accordance with each liquid crystal sub-pixel of the liquid crystal panel. The organic EL panel further includes a light reflecting portion (26; 35) for reflecting light entering from the liquid crystal panel towards the liquid crystal panel. The display includes a first driver (31, 32) for displaying an image on the liquid crystal panel, a second driver (29, 30) for displaying an image on the organic EL panel, and a controller (33) for determining whether to use the first driver and whether to use the second driver to display an image.

## Claims

1. A display for displaying an image, including a color filter (20), the display **characterized by**:
a transmissive or semi-transmissive liquid crystal panel (13) including a display surface, a rear surface located on the opposite side of the display surface, and a plurality of liquid crystal sub-pixels;
an electroluminescence panel (12) arranged on the rear surface side of the liquid crystal panel, the electroluminescence panel including a plurality of EL sub-pixels, each corresponding to one of the liquid crystal sub-pixels, and a light reflecting portion (26; 35) for reflecting light entering from the liquid crystal panel back towards the liquid crystal panel, each EL sub-pixel emitting white light and having light transmissivity relative to at least light having a wavelength that enables transmission through the corresponding color filter;
a first driving means (31, 32) for driving the liquid crystal panel;
a second driving means (29, 30) for driving the electroluminescence panel; and
a selecting means (33, 34) for determining whether to use the first driving means or the second driving means to display an image.

2. A display for displaying an image, including a color filter (20), the display **characterized by**:
a transmissive or semi-transmissive liquid crystal panel (13) including a display surface, a rear surface located on the opposite side of the display surface, and a plurality of liquid crystal sub-pixels;
an.electroluminescence panel (12) arranged on the rear surface side of the liquid crystal panel, the electroluminescence panel including a plurality of EL sub-pixels, each corresponding to one of the liquid crystal sub-pixels, and a light reflecting portion (26; 35) for reflecting light entering from the liquid crystal panel back towards the liquid crystal panel, each EL sub-pixel emitting white light and having light transmissivity relative to at least light having a wavelength that enables transmission through the corresponding color filter;
a first driving means (31, 32) for driving the liquid crystal panel;
a second driving means (29, 30) for driving the electroluminescence panel;
a third driving means (33) for simultaneously driving the liquid crystal panel and the electroluminescence panel; and
a selecting means (33, 34) for determining which one of the first driving means, the second driving means, and the third driving means to use to display the image, wherein when the image is displayed using the third driving means, the third driving means controls the first and the second driving means to display an image on the liquid crystal panel while causing EL sub-pixels corresponding to liquid crystal sub-pixels that are in a black display state to be in a non-light emitting state and the other EL sub-pixels to be in a light emitting state.

3. The display as claimed in claim 2, wherein the third driving means causes the first driving means to perform a gradation process to adjust the amount of light transmission for each liquid crystal sub-pixel.

4. The display as claimed in claim 3, wherein the third driving means causes the second driving means to cause the EL sub-pixels that are in the light-emitting state to emit light at the same brightness.

5. The display as claimed in claim 2, wherein the third driving means causes the second driving means to perform a gradation process to adjust the brightness of the light emitted from the EL sub-pixels that are in the light-emitting state.

6. The display as claimed in any one of claims 1-5 further **characterized by** a second selecting means (33, 34) for determining whether or not to emit light from the entire surface of the electroluminescence panel if the selecting means has determined that an image is to be displayed using the first driving means, wherein when the second selecting means determines to emit light from the entire surface of the electroluminescence panel, the second selecting means controls the second driving means so that light is emitted from the entire surface of the electroluminescence panel.

7. The display as claimed in any one of claims 1-5, wherein the electroluminescence panel is an organic electroluminescence panel.

8. The display as claimed in claim 1, wherein the image is displayed in one of a plurality of modes including a liquid crystal display mode, in which the electroluminescence panel is inactivated and only the liquid crystal panel is driven, and a simultaneous driving mode, in which the liquid crystal panel and the electroluminescence panel are both activated.

9. The display as claimed in claim 8, wherein the simultaneous driving mode includes a backlight mode, in which all of the EL sub-pixels of the electroluminescence panel emit light, and a synchronizing mode, in which each EL sub-pixel is synchronized with and driven with the corresponding liquid crystal sub-pixel.

10. The display as claimed in claim 9, wherein in the synchronizing mode, the EL sub-pixels corresponding to the liquid crystal sub-pixel that are in a black display state do not emit light, and the EL sub-pixels corresponding to the liquid crystal sub-pixels that are in a state other than the black display state emit light.

11. The display as claimed in claim 9, wherein in the synchronizing mode, the EL sub-pixels corresponding to the liquid crystal sub-pixels that are in the black display state do not emit light, and the brightness of each of the EL sub-pixels corresponding to the liquid crystal sub-pixels that are in a state other than the black display state is adjusted in accordance with the amount of light transmitted through the corresponding liquid crystal sub-pixel.
